# EUROPÄISCHE PATENTSCHRIFT

(11) **EP 0 601 228 B1**
(45) Veröffentlichungstag und Bekanntmachung des Hinweises auf die Patenterteilung: **19.10.1994**
(21) Anmeldenummer: 92120906.0
(22) Anmeldetag: 08.12.1992
(51) Int. Cl.: H02K 1/27, H02K 23/66, G01P 3/487

(54) **Elektromotorischer Antrieb**
Electric motor drive
Entraînement à moteur électrique

(43) Veröffentlichungstag der Anmeldung: 15.06.1994
(73) Patentinhaber: SIEMENS AKTIENGESELLSCHAFT, 80333 München (DE)
(72) Erfinder: Knappe, Wolfram, Dipl.-Ing. (FH), W-8710 Kitzingen (DE)

(56) Entgegenhaltungen:
- EP-A- 0 547 767
- CH-A- 630 504
- FR-A- 994 928
- US-A- 2 161 953
- PATENT ABSTRACTS OF JAPAN vol. 016, no. 497 (E-1279)14. Oktober 1992
- PATENT ABSTRACTS OF JAPAN vol. 012, no. 249 (P-730)14. Juli 1988
- PATENT ABSTRACTS OF JAPAN vol. 013, no. 027 (P-815)20. Januar 1989
- PATENT ABSTRACTS OF JAPAN vol. 7, no. 194 (E-195)(1339) 24. August 1983

## Beschreibung

Die Erfindung bezieht sich auf einen elektromotorischen Antrieb gemäß Anspruch 1; derartige Antriebe eignen sich insbesondere als Hilfsantrieb in einem Kraftfahrzeug mit einem auf der Rotorwelle befestigten Polrad als Magnetkörper zur Erzeugung eines drehzahlproportionalen Signals in einer statorseitigen Hallsondenvorrichtung, z.B. zum Einsatz für drehzahlgesteuerte bzw. drehrichtungsgesteuerte Fensterantriebe.

Durch die EP-Al-0 489 940 ist ein Kommutatormotor bekannt, bei dem zur Drehzahlregelung auf einer statorseitigen Elektronik-Anschlußplatte Hallsonden angeordnet sind, denen ein unmittelbar auf der Rotorwelle befestigtes Polrad zugeordnet ist. Die Befestigung des Polrades auf der Rotorwelle kann z.B. durch einen entsprechenden Preßsitz und/oder Klebesitz erfolgen.

Durch die JP-A-41 83 245 bzw. die US-A-2 161 953 sind jeweils Halterungen eines Magnetkörpers auf einer Rotorwelle bekannt, bei denen ein gesondertes Halteteil mit axial vorstehenden Mitnahmearmen in korrespondierende Ausnehmungen der dem Halteteil zugewandten einen Stirnseite des Magnetkörpers greifen; mit seiner anderen Stirnseite liegt der Magnetkörper an einem motorseitigen Anschlag in Form des Rotorblechpakets oder eines auf der Rotorwelle fixierten Sicherungsringes an.

Durch die DE-U1-90 06 935 ist ein elektromotorischer Antrieb, insbesondere für ein Kraftfahrzeug, mit einem Kommutator und einem zur Drehzahl- und/oder Drehrichtungserfassung auf der Rotorwelle angeordneten, mit einem statorseitigen Hallsensor zusammenwirkenden magnetischen Polrad bekannt, wobei zur Halterung des Polrades auf der Rotorwelle zunächst eine Distanzbuchse auf die Rotorwelle drehfest aufgesetzt ist und dann das Polrad konzentrisch zur Distanzbuchse auf dessen Außenumfang entweder aufgepreßt oder aufgesteckt bzw. aufgeklebt oder mit Formschluß befestigt ist; zur Formschluß-Befestigung ist die Distanzbuchse am Außenumfang mit einer Abflachung einerseits und das Polrad an der korrespondierenden Innenseite mit einer entsprechenden Abflachung andererseits versehen. Zur axialen Fixierung liegt die Distanzbuchse mit ihrer einen Stirnseite am Kommutator an und ist an ihrer anderen Stirnseite mit Hilfe eines formschlüssig in die Rotorwelle einsetzbaren Sicherungsringes festgelegt. Das magnetische Polrad kann aus einem Kunststoffkörper mit kunststoffgebundenen Magnet-Partikeln oder aus einem nichtmagnetischen Grundkörper bestehen, in den Permanentmagnete eingesetzt sind.

Der Erfindung liegt die Aufgabe zugrunde, bei kleiner Einbaugröße mit einfachen Mitteln eine auch bei längerem und hartem Betriebseinsatz sichere Fixierung des relativ spröden Magnetkörpers auf der Rotorwelle gewährleisten zu können. Die Lösung dieser Aufgabe gelingt durch einen gemäß der Lehre des Anspruchs 1 ausgebildeten elektromotorischen Antrieb; vorteilhafte Ausgestaltungen der Erfindung sind jeweils Gegenstand der Unteransprüche.

Beim erfindungsgemäßen elektromotorischen Antrieb ist es möglich, ohne Rücksicht auf die Sprödigkeit des Magnetkörpers diesen durch das hinsichtlich eines hinreichenden Preßsitzes stabil auslegbare Halteteil axial und tangential auf der Rotorwelle ohne zusätzliches Verkleben zu fixieren und den Magnetkörper aufgrund seiner Schiebesitz-Halterung relativ zur Rotorwelle auf dieser sich unabhängig vom Halteteil zentrieren zu lassen, wobei durch die axiale Vor-bzw. Hinterlagerung des Haltekörpers relativ zum Magnetkörper eine radial die Baugröße nicht vergrößernde und axial kompakte Befestigungsmöglichkeit für den Magnetkörper möglich ist.

In für eine automatengerechte Montage vorteilhafter Weise ist nach einer Ausgestaltung der Erfindung vorgesehen, daß der Magnetkörper und das Halteteil zu einer vormontierten Bauteileinheit zusammengefaßt sind, derart daß lediglich in einem Handhabungsschritt die Bauteileinheit auf die Rotorwelle aufgesteckt werden muß.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen
- FIG 1: in einem axialen Teilschnittbild einen Kommutatormotor mit in bekannter Weise direkt auf einer Rotorwelle befestigtem Magnetkörper in Form eines Polrades für eine Drehrichtungs- bzw. Drehzahlerfassung durch statorseitige Hallsonden;
- FIG 2: in einem Detailausschnitt aus FIG 1 gemäß Schnittverlauf II-II in FIG 3 eine erste erfindungsgemäße Halterung eines Magnetkörpers durch eine auf die Rotorwelle aufgepreßte Kunststoff-Buchse;
- FIG 3: eine axiale Draufsicht auf die Anordung gemäß FIG 2;
- FIG 4: im Längsschnitt die Kunststoff-Buchse gemäß FIG 2;
- FIG 5: in einem Detailausschnitt aus FIG 1 gemäß Schnittverlauf V-V in FIG 6 eine zweite erfindungsgemäße Halterung eines Magnetkörpers durch eine auf die Rotorwelle aufgepreßte Metallscheibe und eines zur tangentialen und axialen Lagesicherung des Dauermagnetkörpers durch die Metallscheibe diese verbindenden Federbügel;
- FIG 6: eine stirnseitige Draufsicht auf den Federbügel gemäß FIG 5;
- FIG 7: eine axiale Ansicht des Federbügels gemäß FIG 6;
- FIG 8: einen Schnitt durch den Federbügel gemäß Schnittverlauf VIII-VIII in FIG 7;
- FIG 9: eine axiale Draufsicht auf die Metallscheibe gemäß FIG 5;
- FIG 10: in einem Detailausschnitt aus FIG 1 eine dritte erfindungsgemäße Halterung eines Magnetkörpers durch beidseitige, auf die Welle aufgepreßte und durch einen Verbindungssteg verbundene Haltebügel;
- FIG 11: eine stirnseitige Draufsicht auf den Magnetkörper gemäß FIG 10;
- FIG 12: eine axiale Draufsicht auf den durch den Verbindungssteg verbundenen Haltebügel in seiner endgültigen Formgebung gemäß FIG 10;
- FIG 13: den Haltebügel gemäß FIG 12 als Vorfertigteil in Form eines abgewickelten Stanz-Biege-Teils.

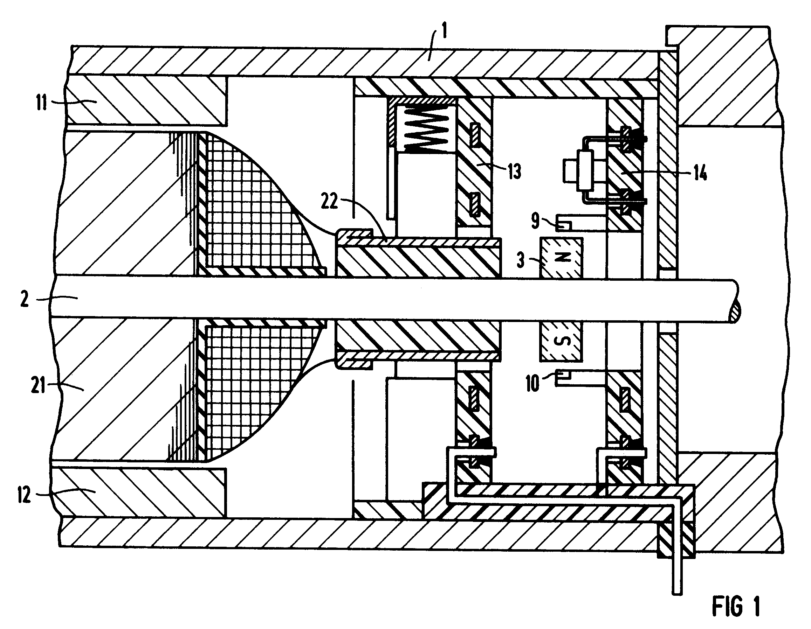

FIG 1 zeigt in einem axialen Teilschnittbild einen Kommutatormotor mit an der Innenumfangsfläche eines Motorgehäuses 1 zur Erregung vorgesehenen Dauermagneten 11,12 und einem auf einer Rotorwelle 2 befestigten, mit einer Rotorwicklung versehenen Rotorpaket 21 sowie einem axial vorgelagerten Kommutator 22, der über an einer Bürstentragplatte 13 gehaltenen Kohlebürsten beschliffen wird. Zur Drehrichtungs- bzw. Drehzahlerfassung ist unmittelbar auf der Rotorwelle 2, z.B. durch Aufkleben, ein Polrad NS mit einem entsprechend polarisierten Dauermagnetkörper 3 aus einem kunststoffgebundenen Ferritmagnetring befestigt, dem auf einer statorseitigen Leiterplatte 14 Hallsonden 9,10 zugeordnet sind.

Es hat sich gezeigt, daß die Klebeverbindung nicht in allen Fällen, insbesondere bei rauhem Betriebseinsatz und längeren Betriebszeiten, einen sicheren Festsitz auf der Rotorwelle gewährleisten kann; ein solchen Belastungen besser widerstehender Preßsitz des Magnetkörpers verbietet sich aufgrund dessen Sprödigkeit, die bei zu großem Druck bzw. Zugspannungen, insbesondere bei entsprechenden Toleranzen der zusammenzubauenden Bauteile, zu Rissen im Magnetkörper und damit zu einer Lockerung des Festsitzes führen können.

Die vorgenannten Nachteile werden auf einfache Weise und bei vorteilhafter kleiner Bauform erfindungsgemäß dadurch verbunden, daß der eigentliche Magnetkörper von einer Festsitz-Pressung auf der Rotorwelle 2 befreit ist und diese Fixierung von einem axial vor und/oder nachgelagerten Halteteil übernommen wird, relativ zu dem der Magnetkörper 3 sich jedoch an der Rotorwelle 2 selbst zentrieren und damit seinen optimalen Abstand zu statorseitigen Hallsonden einnehmen kann.

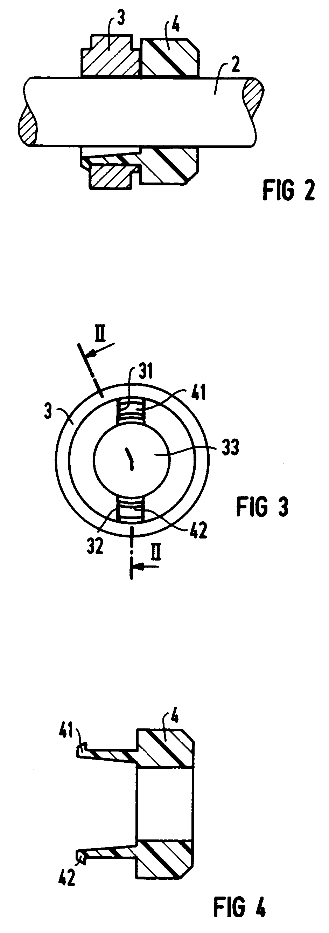

FIG 2-4 zeigen ein erstes Ausführungsbeispiel einer erfindungsgemäßen Fixierung des Dauermagnetkörpers 3 auf einer Rotorwelle 2. Dazu ist an der rechten Stirnseite des lediglich im Schiebesitz und damit selbstzentrierend auf die Rotorwelle 2 aufgesteckten Magnetkörpers 3 eine Kunststoff-Buchse 4 aufgepreßt, die mit axial vorstehenden Schnapphaken 41,42 durch Nuten 31,32 des Magnetkörpers 3 hindurchgesteckt und mit Anlage an der linken Stirnseite des Magnetkörpers 3 verrastet ist. Wie insbesondere aus FIG 4 ersichtlich, ist in vorteilhafter Weise die Kunststoff-Buchse 4 mit den Schnapphaken 41,42 als einstückiges Kunststoff-Spritzgußteil ausgebildet.

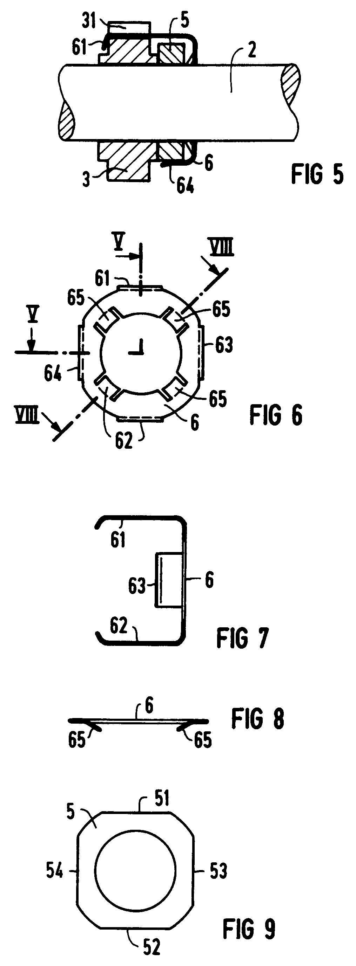

Gemäß einem weiteren Ausführungsbeispiels nach FIG 5-9 besteht das Halteteil 5,6 aus einer an einer Stirnseite des Magnetkörpers 3 mittel bzw. unmittelbar anliegenden wärmefesteren Metallscheibe 5, insbesondere einer Messingscheibe, und einem dieser vorgelagerten Federbügel 6 mit axial vorstehenden, durch Nuten 31,32 des Magnetkörpers 3 reichenden und an der anderen Stirnseite des Magnetkörpers 3 anliegenden Haltearmen 61,62; im letzteren Fall sind wiederum der Magnetkörper 3 lediglich in zentrierendem Schiebesitz und die Metallscheibe 5 im Preßsitz auf die Rotorwelle 2 aufgebracht. Der vorzugsweise preßsitzfrei auf die Rotorwelle 2 aufgesteckte Federbügel 6 steht über axial vorstehende Mitnahmearme 63,64 in formschlüssiger Drehmitnahme mit der auf der Rotorwelle 2 festsitzenen Metallscheibe 5; dazu weist die Metallscheibe 5 gemäß FIG 9 zu den flächigen Mitnahmearmen 63,64 korrespondierende Abflachungen 53,54 am Außenumfang der Metallscheibe 5 auf. Zwischen den vorgenannten Abflachungen 53,54 liegen ähnliche Abflachungen 51,52, an denen die den Magnetkörper 3 übergreifenden, ebenfalls flächigen Haltearme 61,62 anliegen.

Im Sinne eines vorteilhaften Toleranzausgleiches weist der Federbügel 6 weiterhin über seinen Umfang verteilt axial vorstehende Federlappen 65 auf, mit denen sich der Federbügel 6 an der gegenüberliegenden Stirnseite der Metallscheibe 5 federnd abstützen kann.

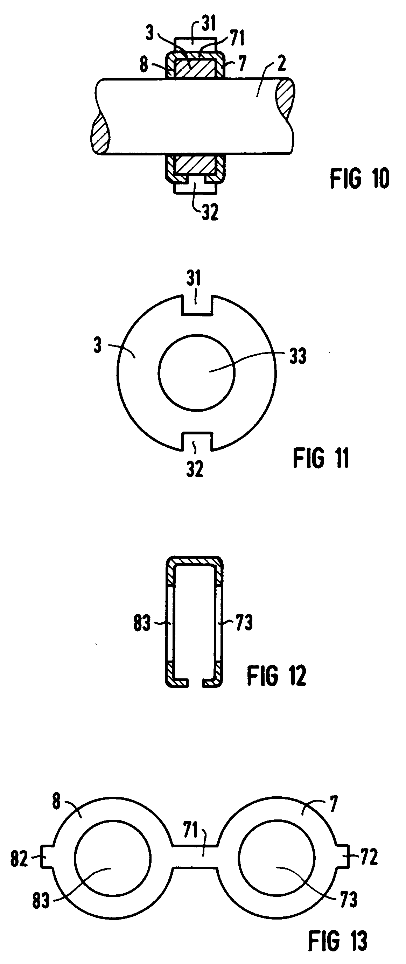

Gemäß einem weiteren erfindungsgemäßen Ausführungsbeispiel nach FIG 10-13 besteht das Halteteil 7,8 aus je einem an jeder der beiden Stirnseiten des Magnetkörpers 3 an- bzw. einliegenden Haltebügeln 7 bzw.8, die durch eine, vorzugsweise ebenfalls in eine Nut 31 des Magnetkörpers 3 eingreifenden, Verbindungssteg 71 miteinander verbunden sind. Wie insbesondere aus FIG 10 und FIG 12 ersichtlich, sind die dem Verbindungssteg 71 gegenüberliegenden freien Enden der Haltebügel 7 bzw.8 mit ebenfalls in zweckmäßiger Weise in eine korrespondierende Nut 32 des Magnetkörpers 3 eingreifenden axialen Mitnahmestegen 72,82 versehen. Die beiden stirnseitigen ringförmigen Halteteile 7,8 mit ihren im Sinne einer Preßsitzhalterung auf der Rotorwelle 2 bemessenen Rotorwellenöffnungen 73,83 können entweder gemäß FIG 12 vorgebogen und dann unter Auffederung der freien Enden über den Magnetkörper 3 radial gestülpt werden oder gemäß FIG 13 nach vorteilhafter Herstellung als flächiges Biege-Stanz-Teil über den Magnetkörper 3 gebogen werden. Im letzteren Fall sind somit auf einfache Weise der Dauermagnetkörper 3 und das Halteteil 7,8 zu einer vormontieren Bauteileeinheit zusammengefaßt, die in nur einem einzigen Montage-Handhabungsvorgang auf die Rotorwelle 2 aufgesteckt werden kann, wobei sich der Dauermagnetkörper 3 mit seiner entsprechend vorgesehenen Rotorwellenöffnung 33 im Schiebesitz auf der Rotorwelle 2 selbst zentriert und durch das Halteteil 7,8 mit der entsprechend gegenüber der Rotorwellenöffnung 33 mit Untermaß versehenen Rotorwellenöffnung 73 bzw. 83 im Preßsitz auf die Rotorwelle aufgesteckt wird.

Ähnlich wie zuvor für das Halteteil 7,8 beschrieben, können auch im Fall der Ausführungsbeispiele nach FIG 2-4 bzw. FIG 5-9 der Dauermagnetkörper 3 und die Kunststoff-Buchse 4 mit den angeformten Schnapphaken 41,42 sowie die Metallscheibe 5 mit dem formschlüssig anliegenden Federbügel 6 zusammen mit dem Dauermagentkörper 3 als vormontierte Bauteileinheiten zusammengefaßt und dann einstückig auf die Rotorwelle 2 aufgebracht werden.

## Patentansprüche

1. Elektromotorischer Antrieb, insbesondere Hilfsantrieb für ein Kraftfahrzeug, mit auf seiner Rotorwelle (2) konzentrisch gehaltenem Magnetkörper (3) mit den Merkmalen:
a) Der Magnetkörper (3) ist zur radialen Lagesicherung mit einer entsprechenden Rotorwellenöffnung (33) auf die Rotorwelle (2) zentrierend, jedoch druck- bzw. zugspannungsfrei aufgesteckt;
b) der Magnetkörper steht zur beidseitigen axialen Lagesicherung bzw. tangentialen Drehmitnahme mit einem axial vor- und/oder nachgelagerten, auf der Rotorwelle (2) festsitzend aufgedrückten Halteteil (4 bzw.5; 6 bzw. 7,8) in formschlüssiger axialer und tangentialer Anlageverbindung.

2. Elektromotorischer Antrieb nach Anspruch 1 mit dem Merkmal:
c) Der Magnetkörper (3) ist im Schiebesitz auf die Rotorwelle (2) aufgesteckt.

3. Elektromotorischer Antrieb nach Anspruch 1 oder 2 mit dem Merkmal:
d) Das Halteteil (4 bzw. 5,6 bzw. 7,8) ist im Fest- bzw. Preßsitz auf die Rotorwelle (2) aufgedrückt.

4. Elektromotorischer Antrieb nach einem der Ansprüche 1-3 mit dem Merkmal:
e) Der Magnetkörper (3) und das Halteteil (4 bzw. 5,6 bzw. 7,8) sind zu einer vormontierten Bauteileinheit zusammengefaßt.

5. Elektromotorischer Antrieb nach einem der Ansprüche 1-4 mit dem Merkmal:
f) Der Magnetkörper (3) besteht aus einem Sintermagnetring oder einem kunststoffgebundenen Ferritmagnetring.

6. Elektromotorischer Antrieb nach einem der Ansprüche 1-5 mit dem Merkmal:
g) Das Halteteil (4) besteht aus einer an einer Stirnseite des Magnetkörpers (3) mittel bzw. unmittelbar anliegenden Buchse, insbesondere Kunststoff-Buchse (4), mit axial vorstehenden, durch Nuten (31;32) des Magnetkörpers (3) reichenden und an der anderen Stirnseite des Magnetkörpers (3) anliegenden Haltearmen, insbesondere Schnapphaken (41,42).

7. Elektromotorischer Antrieb nach Anspruch 6 mit dem Merkmal:
h) Die Haltearme, insbesondere Schnapphaken (41,42), sind einstückige Bestandteile der Kunststoff-Buchse (4).

8. Elektromotorischer Antrieb nach einem der Ansprüche 1-5 mit dem Merkmal:
i) Das Halteteil (5,6) besteht aus einer an einer Stirnseite des Magnetkörpers (3) mittel bzw. unmittelbar anliegenden Metallscheibe (5), insbesondere Messingscheibe, und einem dieser vorgelagerten Federbügel (6) mit axial vorstehenden, durch Nuten (31,32) des Magnetkörpers (3) reichenden und an der anderen Stirnseite des Magnetkörpers (3) anliegenden Haltearmen (61,62).

9. Elektromotorischer Antrieb nach Anspruch 8 mit dem Merkmal:
k) Der preßsitzfrei auf die Rotorwelle (2) aufgesteckte Federbügel (6) steht über axial vorstehende Mitnahmearme (63,64) in formschlüssiger Drehmitnahme mit der Metallscheibe (5).

10. Elektromotorischer Antrieb nach einem der Ansprüche 1-5 mit dem Merkmal:
l) Das Halteteil (7,8) besteht aus je einem an jeder der beiden Stirnseiten des Magnetkörpers (3) an- bzw. einliegenden Haltebügel (7 bzw.8), die durch einen, insbesondere in eine Nut (31) des Magnetkörpers (3) eingreifenden, Verbindungssteg (71) miteinander verbunden sind.

11. Elektromotorischer Antrieb nach Anspruch 10 mit dem Merkmal:
m) Die dem Verbindungssteg (71) gegenüberliegenden Enden der Haltebügel (7 bzw.8) sind jeweils mit, ebenfalls insbesondere in zumindest eine korrespondierende Nut (32) des Magnetkörpers (3) eingreifenden, axialen Mitnahmestege (72 bzw.82) versehen.

12. Elektromotorischer Antrieb nach Anspruch 10 und/oder 11 mit dem Merkmal:
n) Die beiden stirnseitigen Halteteile (7 bzw. 8) und der Verbindungssteg (71) bzw. die Mitnahmestege (72,82) sind Teile eines einstückigen, als vorgeformtes Schnappteil über den Magnetkörper (3) aufgesteckten Stanz-Biege-Teils.

13. Elektromotorischer Antrieb nach Anspruch 12 mit dem Merkmal:
o) Die beiden stirnseitigen Halteteile (7 bzw. 8) und der Verbindungssteg (71) bzw. die Mitnahmestege (72,82) sind Teile eines einstückigen, über den Magnetkörper (3) gebogenen Stanz-Biege-Teils.

14. Elektromotorischer Antrieb nach einem der Ansprüche 1-13, insbesondere nach Anspruch 8, mit dem Merkmal:
p) Das Halteteil (4 bzw. 5;6 bzw. 7,8) ist gegenüber dem Magnetkörper (3) axial federnd, insbesondere mittels angeformter axialer Federlappen (65), abgestützt.

15. Elektromotorischer Antrieb nach einem der Ansprüche 1-14 mit dem Merkmal:
q) Der Magnetkörper (3) ist als zumindest einem statorseitigen Halteelement (9 bzw.10) zugeordnetes Polrad (N;S) eines Drehzahl- bzw. Drehrichtungsgebers, insbesondere eines Kraftfahrzeug-Fensterheberantriebs, ausgebildet.

## Claims

1. Electric motor-driven drive, in particular an auxiliary drive for a motor vehicle, with a magnet body (3) concentrically held on its rotor shaft (2), having the features that:
a) to provide radial position locking, the magnet body (3) having a corresponding rotor shaft opening (33) is placed on the rotor shaft (2) in a centring manner, but without compressive or tensile stresses;
b) to provide axial position locking or tangential locking on both sides, the magnet body is placed in positive-locking and tangential contact connection with a holding part (4 or 5; 6 or 7, 8) arranged axially in front and/or behind the magnet body, said holding part being force-fitted onto the rotor shaft (2).

2. Electric motor-driven drive according to Claim 1, with the feature that:
c) the magnet body (3) is mounted on the rotor shaft (2) with a sliding fit.

3. Electric motor-driven drive according to Claim 1 or 2, with the feature that:
d) the holding part (4 or 5, 6 or 7, 8 respectively) is pressed onto the rotor shaft (2) with a force fit or a press fit.

4. Electric motor-driven drive according to one of the Claims 1 to 3, with the feature that:
e) the magnet body (3) and the holding part (4 or 5, 6 or 7, 8 respectively) are combined to form a pre-assembled sub-assembly.

5. Electric motor-driven drive according to one of the Claims 1 to 4, with the feature that:
f) the magnet body (3) consists of a sintered magnet ring or a plastic-encapsulated ferrite magnet ring.

6. Electric motor-driven drive according to one of the Claims 1 to 5, with the feature that:
g) the holding part (4) consists of a bush, in particular a plastic bush (4), in direct or indirect contact with one end face of the magnet body (3), said bush having axially-protruding retaining arms, in particular snap hooks (41, 42), which extend through slots (31; 32) in the magnet body (3) and rest against the other end face of the magnet body (3).

7. Electric motor-driven drive according to Claim 6, with the feature that:
h) the retaining arms, in particular snap hooks (41, 42) are integral parts of the plastic bush (4).

8. Electric motor-driven drive according to one of the Claims 1 to 5, with the feature that:
i) the holding part (5, 6) consists of a metal disc (5), in particular a brass disc, which rests directly or indirectly against one end face of the magnet body (3), and a spring clip (6) arranged in front of the metal disc (5) and having axially-protruding retaining arms (61, 62) which extend through slots (31, 32) in the magnet body (3) and rest against the other end face of the magnet body (3).

9. Electric motor-driven drive according to Claim 8, with the feature that:
k) the spring clip (6), placed onto the rotor shaft (2) without force fitting, is in force-locked driving engagement with the metal disc (5) via axially-protruding driving arms (63, 64).

10. Electric motor-driven drive according to one of the Claims 1 to 5, with the feature that:
l) the holding part (7, 8) consists of retaining clips (7 and 8 respectively), resting against the two respective end faces of the magnet body (3), the two retaining clips (7, 8) being connected together by a connecting web (71) which, in particular, engages a slot (31) in the magnet body (3).

11. Electric motor-driven drive according to Claim 10, with the feature that:
m) the ends of the retaining clip (7 or 8 respectively) opposite the connecting web (71) are each provided with axial driving webs (72 or 82 respectively) which engage at least one corresponding slot (32) in the magnet body (3).

12. Electric motor-driven drive according to Claim 10 and/or Claim 11, with the feature that:
n) the two end face holding parts (7 or 8 respectively) and the connecting web (71) or the driving webs (72, 82), respectively, are parts of a one-piece, prefabricated snap-action, stamped/bent part placed over the magnet body (3).

13. Electric motor-driven drive according to Claim 12, with the feature that:
o) the two end face holding parts (7 or 8 respectively) and the connecting web (71) or the driving webs (72, 82) respectively, are parts of a one-piece stamped/bent part bent over the magnet body (3).

14. Electric motor-driven drive according to one of the Claims 1 to 13, in particular Claim 8, with the feature that:
p) the holding part (4 or 5; 6 or 7, 8 respectively) is supported against the magnet body (3) in an axially-resilient manner, in particular by means of integrally-formed spring lugs (65).

15. Electric motor-driven drive according to one of the Claims 1 to 14, with the feature that:
q) the magnet body (3) is designed as a magnet wheel (N; S) of a speed transducer or direction transducer, respectively, in particular of a window lift drive of a motor vehicle, said magnet wheel being associated with at least one stator-side holding element (9 or 10 respectively).

## Revendications

1. Dispositif d'entraînement à moteur électrique, notamment dispositif d'entraînement auxiliaire d'un véhicule automobile, comportant un corps magnétique (3) retenu concentriquement sur l'arbre (2) de son rotor, présentant les caractéristiques suivantes :
a) le corps magnétique (3) est enfiché d'une manière centrée, par une ouverture correspondante (33), sur l'arbre (2) du rotor pour un blocage radial en position mais sans l'application d'une contrainte de compression ou de traction;
b) pour le blocage axial en position des deux côtés ou pour l'entraînement tangentiel en rotation, le corps magnétique est relié, selon une liaison axiale et tangentielle par formes complémentaires, à une partie de support (4 ou 5; 6 ou 7, 8), disposée axialement en amont et/ou en aval et montée fixe sur l'arbre (2) du rotor.

2. Dispositif d'entraînement à moteur électrique suivant la revendication 1, présentant la caractéristique suivante :
c) le corps magnétique (3) est emmanché selon un ajustement coulissant sur l'arbre (2) du rotor.

3. Dispositif d'entraînement suivant la revendication 1 ou 2, présentant la caractéristique suivante :
d) la partie de support (4 ou 5, 6 ou 7, 8) est serrée sur l'arbre (2) du rotor selon un ajustement bloqué ou serré.

4. Dispositif d'entraînement à moteur électrique suivant l'une des revendications 1-3, présentant la caractéristique suivante :
e) le corps magnétique (3) et la partie de blocage (4 ou 5, 6 ou 7, 8) sont réunis pour former une unité de construction préassemblée.

5. Dispositif d'entraînement à moteur électrique suivant l'une des revendications 1-4, présentant la caractéristique suivante :
f) le corps magnétique (3) est constitué par un anneau d'aimants frittés ou un anneau d'aimants de ferrite, lié par une matière plastique.

6. Dispositif d'entraînement à moteur électrique suivant l'une des revendications 1-5, présentant la caractéristique suivante :
g) la partie de support (4) est constituée par une douille appliquée directement ou indirectement contre une face frontale du corps magnétique (3), notamment une douille en matière plastique (4), possédant des bras de retenue, notamment des crochets d'encliquetage (41, 42), qui font saillie axialement, s'étendent dans des rainures (31; 32) du corps magnétique (3) et s'appliquent contre l'autre face frontale du corps magnétique (3).

7. Dispositif d'entraînement à moteur électrique suivant la revendication 6, présentant la caractéristique suivante :
h) les bras de retenue, notamment les crochets d'encliquetage (41, 42), sont des constituants d'un seul tenant de la douille en matière plastique (4).

8. Dispositif d'entraînement à moteur électrique suivant l'une des revendications 1-5, présentant la caractéristique suivante :
i) la partie de retenue (5, 6) est constituée par un disque métallique (5), notamment un disque en laiton, qui s'applique directement ou indirectement contre une face frontale du corps magnétique (3), et par un étrier à ressort (6) monté en amont et qui comporte des bras de retenue (61,62) qui font saillie axialement, s'étendent dans des rainures (31,32) du corps magnétique (3) et s'appliquent contre l'autre face frontale du corps magnétique (3).

9. Dispositif d'entraînement à moteur électrique suivant la revendication 8, présentant la caractéristique suivante :
k) l'étrier à ressort (6), qui est emmanché sans ajustement serré sur l'arbre (2) du rotor, est relié au disque métallique (5) selon une liaison d'entraînement en rotation à formes complémentaires, par l'intermédiaire de bras d'entraînement (63, 64) qui font saillie axialement.

10. Dispositif d'entraînement à moteur électrique suivant l'une des revendications 1-5, présentant la caractéristique suivante :
l) la partie de support (7,8) est constituée par des étriers respectifs de retenue (7 ou 8), qui s'appliquent sur ou dans chacune des deux faces frontales du corps magnétique (3) et qui sont reliés entre eux par une barrette de liaison (71), qui s'engage notamment dans une rainure (31) du corps magnétique (3).

11. Dispositif d'entraînement à moteur électrique suivant la revendication 10, présentant la caractéristique suivante :
m) les extrémités, qui sont situées en vis-à-vis de la barrette de liaison (71), des étriers de retenue (7 ou 8) sont équipées respectivement d'une barrette axiale d'entraînement (72 ou 82), qui s'engage également notamment dans au moins une rainure correspondante (32) du corps magnétique (3).

12. Dispositif d'entraînement à moteur électrique suivant la revendication 10 et/ou 11, présentant la caractéristique suivante :
n) les deux éléments de retenue frontaux (7 ou 8) et la barrette de liaison (61) et les barrettes d'entraînement (72, 82) font partie d'une pièce découpée et pliée monobloc, emmanchée en tant que pièce d'encliquetage préformée par-dessus le corps magnétique (3).

13. Dispositif d'entraînement à moteur électrique suivant la revendication 12, présentant la caractéristique suivante :
o) les deux parties de support frontales (7 ou 8) et la barrette de liaison (71) ou les barrettes d'entraînement (72,82) font partie d'une pièce découpée et pliée monobloc, qui est recourbée par-dessus le corps magnétique (3).

14. Dispositif d'entraînement à moteur électrique suivant l'une des revendications 1-13, notamment suivant la revendication 8, présentant la caractéristique suivante :
p) la partie de support (4 ou 5; 6 ou 7, 8) est supportée élastiquement axialement par rapport au corps magnétique (3), et ce notamment au moyen de languettes élastiques axiales conformées (65).

15. Dispositif d'entraînement à moteur électrique suivant l'une des revendications 1-14, présentant la caractéristique suivante :
q) le corps magnétique (3) est réalisé sous la forme d'au moins une roue polaire (N; S), qui est associée à un élément de retenue en forme de stator (9 ou 10), d'un capteur de la vitesse ou du sens de rotation, notamment d'un dispositif d'entraînement de lève-glace de véhicule automobile.
